(19) Europäisches Patentamt

European Patent Office

Office européen des brevets

(11) **EP 3 594 838 A1**

(12) **EUROPEAN PATENT APPLICATION**

(43) Date of publication:
**15.01.2020 Bulletin 2020/03**

(51) Int Cl.:
*G06F 21/36* (2013.01)   *H04L 9/32* (2006.01)

(21) Application number: **18182425.1**

(22) Date of filing: **09.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Skeyecode
75008 Paris (FR)**

(72) Inventor: **LELEU, Jean-Luc
75013 Paris (FR)**

(74) Representative: **de Roquemaurel, Bruno
Omnipat
24 place des Martyrs de la Résistance
13100 Aix en Provence (FR)**

(54) **METHOD FOR RECOVERING A SECRET KEY SECURELY STORED IN A SECURE ELEMENT**

(57)   The invention relates to a method for generating a secret data to be stored in a secure element, the method comprising: authenticating a user of the secure element on the basis of a password (PC) shared by the user and the secure element; generating by the authentication server a first software component (GCG) configured to receive as input data a master key (MKY), the password, and an encryption key (CSK) securely stored by the secure element, and to provide a secret data (SPK) encrypted using the encryption key; dividing the first software component into software parts (GCPi) which are executable separately, each software part receiving a data part (GVI) of the input data, at least one of the software parts providing the encrypted secret data; transmitting each software part and a corresponding data part of the input data to a respective execution server (SSVi); executing by each execution server one of the software parts using the data part corresponding to the software part, to obtain the encrypted secret data (ESPK); transmitting the encrypted secret data to the secure element; and decrypting the encrypted secret data by the secure element using the encryption key, and securely storing the decrypted secret data in said secure element.

Fig. 3

**Description**

TECHNICAL FIELD

The present invention relates to a method and a system for securely generating and loading a secret key in a secure element such as an embedded secure element included for instance in a portable object such as a smartcard or the like. When the secure element is lost or stolen, the method may be used to regenerate the same secret key inside a new secure element.

The secret key may be used for authentication and/or signing a transaction. The transaction may involve a cryptocurrency, and more particularly a decentralized cryptocurrency.

BACKGROUND

A cryptocurrency is a digital asset intended to be used during a transaction as a medium of exchange using cryptography to secure the transaction. Cryptography is also used to secure the creation of additional currency units from traditional currency units, and to verify the transfer of funds. A decentralized cryptocurrency operates independently from a central banking organization.

Currently, over a thousand cryptocurrency specifications exist, most are similar to and derived from bitcoin which is the first fully implemented decentralized cryptocurrency. Within cryptocurrency systems the safety, integrity and balance of ledgers are maintained by a community of mutually distrustful parties referred to as miners. Miners are members of the general public using their computers to help validate and timestamp transactions adding them to the ledger in accordance with a particular timestamping scheme. Miners have a financial incentive to maintain the security of a cryptocurrency ledger. Cryptocurrencies use various timestamping schemes, to avoid the need for a trusted third party to timestamp the transactions added to a block chain ledger. The first timestamping scheme created was the proof-of-work scheme. The most widely used proof-of-work schemes are based on SHA-256, which is used by bitcoin. To receive or spend cryptocurrency units there is needed public and private keys which are stored in a software or hardware cryptocurrency wallet of each party of the cryptocurrency. Each cryptocurrency transaction is signed by the sending party of the transaction using the private key. Some cryptocurrencies involve miners that check transactions and write the transaction terms into the block chain ledger.

The production of a signature to validate cryptocurrency transaction from a mobile terminal raises security problems, notably because "malicious software" or "malware" may be executed by the main processor (CPU) of the terminal. A malware may be able to access to all or a part of the memories accessible by the main processor, and thus may be maliciously configured to retrieve the private key required to sign a transaction or to modify data related to the amount or receiving party of the transaction.

To ensure the security of such transactions, it has been proposed to entrust cryptographic computations to a dedicated secure element, such as the processor of a UICC ("Universal Integrated Circuit Card") card, e.g. a SIM (subscriber identification module) card with which cell phones are generally equipped. However, accessing secure functions installed in the processor of a UICC card generally entails inputting a secret code (PIN code) by means of a keypad or a touch-sensitive surface connected to the main processor of the terminal. In a classical configuration, the secret code input by the user necessarily passes through the main processor. Malware executed by the main processor can therefore access this secret code.

In addition, the secure element of a user may be lost or stolen, and it should be necessary to generate a new secure element with the same private key stored therein, in order to enable the user to perform new transactions with his remaining credit in the cryptocurrency.

A known solution generates the private key from a master key which is memorized and kept secret by the user. To this purpose, the master key may be formed from a number of words that are memorized or written by the user. The private key is generated within a secure element which has or is associated with a keypad to enter the master key. Then the secure element can be used to sign a transaction, the user being requested to type a secret code (PIN code) or sentence using the keypad of the secure element. Such a secure element is generally a dongle having a USB (Universal Serial Bus) port or a NFC (Near Field Communication) interface. However, this solution requires a costly secure element with a display and input means (such as a keypad) to enter the master key and the secret code. This solution also requires the user to memorize a long master key. In some applications, this master key is formed of 24 words. In addition, the keypad of such a secure element is generally small and unpractical such that typing of the master key is very tedious. Another solution proposes to store the master key in the form of an optical code that can be scanned outside the secure element and decoded by the latter. However this solution raises security problems as the optical code cannot be directly scanned by the secure element, and the support of the optical code may be lost. Then, without the master key, it is not possible to regenerate the private key.

The patent application EP 3 319 001 filed by the Applicant discloses a method enabling a user to securely enter a secret code using a non-secure terminal. According to this method, the terminal executes a single-use software component to generate image frames of a keypad with key labels arranged in a random order and formed with segments having a probability lower than 100% to be in a visible or invisible state. When the image frames are displayed at a sufficiently high refresh rate, all the displayed segments become visibly recognizable to a user thanks to the persistence of the human visual system. In this way, even if a malicious program running on the user terminal is able to access the positions of the keys touched by the user during input of a secret code, it cannot, by taking a succession of screenshots, determine which labels correspond to the touched keys.

It may be desirable to propose a method for securely generating a secret key such as those used for signing transaction data, in a secure element having no display and no input means, i.e. without requiring the user to enter a master key using the securing element. It may also be desirable to protect secret data that are required to generate the secret key. It may also be desirable to protect secret data input by users and transiting through such a non-secure terminal, and

SUMMARY

A method is described for generating random numbers. The method may include method for generating a secret data to be stored in a secure element, the method comprising: authenticating a user of the secure element on the basis of a password shared by the user and the secure element; generating by the authentication server a first software component configured to receive as input data a master key, the password, and an encryption key securely stored by the secure element, and to provide a secret data encrypted using the encryption key; dividing the first software component into software parts which are executable separately, each software part receiving a data part of the input data, at least one of the software parts providing the encrypted secret data; transmitting each software part and a corresponding data part of the input data to a respective execution server; executing by each execution server one of the software parts using the data part corresponding to the software part, to obtain the encrypted secret data; transmitting the encrypted secret data to the secure element; and decrypting the encrypted secret data by the secure element using the encryption key, and securely storing the decrypted secret data in said secure element.

According to an embodiment, the data parts of the input data are provided in an encryption format to the software parts, the encryption format being such that each data part has valid values and a plurality of invalid values, the method further comprising: transmitting each valid value of each encrypted data part with a corresponding unencrypted value and a position of the corresponding unencrypted value in the input data, to a corresponding entity securely storing the corresponding input data, the transmission being performed so as to preserve confidentiality of the transmitted data; selecting by the corresponding entity the valid values corresponding to the input data; and transmitting each selected valid value of the encrypted data parts to one of the execution servers.

According to an embodiment, each data part is a binary data having two valid values representing binary states 0 and 1, respectively.

According to an embodiment, the authentication of the user comprises: receiving from the authentication server, by a user terminal connected to the secure element, a second software component configured to generate sets of pixels, each set of pixels having a visible state and an invisible state, and having a respective probability to be in the visible state or the invisible state being less than 100%; executing, by the user terminal, the second software component at a rate corresponding to a frame display refresh rate to generate the sets of pixels at the frame display refresh rate; inserting the sets of pixels generated by each execution of the second software component into one respective image frame; activating display of the image frames at the frame display refresh rate, each image frame including information which is machine non-recognizable as being formed of the sets of pixels, the information becoming visibly recognizable to a user at the frame display refresh rate based on a human visual system; acquiring data input by the user in relation with the information; and transmitting, by the user terminal, the data input by the user, to the secure element, the password being determinable from the data input by the user and from the information, the information being determined from a seed number known by the secure element.

According to an embodiment, the first and/or second software component is/are encoded as a garbled circuit including circuit inputs, circuit outputs, logic gates and wires, each logic gate having two inputs and one output, each wire having a first end connected to one of the circuit inputs or to the one output of one of the logic gates and a second end connected to one of the two inputs of one of the logic gates or to one of the circuit outputs, the garbled circuit being generated by selecting a valid data for each binary state of each of the wires, and by computing for one logic gate of the garbled circuit, truth table values as a function of each valid data of each of the two inputs of the one logic gate, each valid data of the output of the one logic gate and a logic operation performed by one of the logic gates.

According to an embodiment, the output data provided by the garbled circuit are decrypted using a decoding mask, by combining a respective bit of each output data with a respective bit of the decryption mask.

According to an embodiment, the output data of the first software component and the decoding mask are transmitted to the secure element, the secure element determining the encrypted secret data using the decryption mask.

According to an embodiment, the first software component comprises a first module for generating the secret data from the master key and the password, and a second module for encrypting the secret data using the encryption key of the secure element.

According to an embodiment, the first software component further comprises a third module for determining the password from data input by the user, in relation with information displayed to request the password to the user, and from a seed number defining the information.

According to an embodiment, the software parts are configured to exchange data with each other using secure transmission channels, or by transmitting all valid values of a data to be transmitted, the data to be transmitted being in an encrypted format with valid values and a plurality of invalid values, the value of the data to be transmitted being in a position with respect to the other transmitted valid values, known by the server to which the data is transmitted.

According to an embodiment, the first software component is stored by the authentication server after being generated, and modified for generating the secret data again.

According to an embodiment, the division of the first software component into the software parts is changed at each execution of the software component.

Embodiments may also relate to a server configured to: perform a mutual authentication with a secure element associated with a user terminal in communication with the server; generate a first software component configured to receive as input data a master key, the password, and an encryption key securely stored by the secure element, and to provide a secret data encrypted using the encryption key; divide the first software component into software parts which are executable separately, each software part receiving a data part of the input data, at least one of the software parts providing the encrypted secret data; and transmit each software part and a corresponding data part of the input data to a respective execution server, the execution by each execution server one of the software parts using the data part corresponding to the software part, providing a secret data which is encrypted using the encryption key and which is transmitted to the secure element.

According to an embodiment, the server is configured to implement the above-defined method.

BRIEF DESCRIPTION OF THE DRAWINGS

The method and/or device disclosed may be better understood with reference to the following drawings and description. Non-limiting and non-exhaustive descriptions are described with the following drawings. In the figures, like referenced signs may refer to like parts throughout the different figures unless otherwise specified.

Figure 1 is a block diagram of user terminals performing transactions with remote servers;
Figure 2 is a block diagram of a user terminal;
Figure 3 is a sequential diagram showing first steps for generating a secret key within a secure element, according to an embodiment;
Figure 4 is a sequential diagram showing second steps for generating a secret key within a secure element, according to an embodiment;
Figure 5 is a block diagram of a circuit implemented by software for generating the secret key, according to an embodiment;
Figure 6 is a block diagram of the circuit of Figure 5, divided into circuit parts that are respectively transmitted to and executed by different servers, according to an embodiment;
Figure 7 is a block diagram of a database describing the circuit of figure 5, according to an embodiment;
Figures 8A and 8B represent respectively an image frame displayed by a user terminal, and a corresponding resultant image which can be observed by a user of the user terminal, according to an embodiment;
Figure 9 represents two layers of a part of an image frame which are displayed superimposed by the user terminal, a corresponding part of a resultant image frame which is displayed by the user terminal, and a corresponding part of a resultant image which can be observed by a user of the user terminal, according to an embodiment;
Figure 10 is a block diagram of an application program executed by the user terminal, according to an embodiment;
Figure 11 is a block diagram of a circuit implemented by software in the user terminal, according to an embodiment;
Figure 12 is a block diagram of a database describing the circuit of figure 11, according to an embodiment;
Figure 13 is a block diagram illustrating a processing performed by the application program of Figure 10 for displaying the image frame of Figure 8A, according to an embodiment.

DETAILED DESCRIPTION

In the following, the term "secure" is employed according to its plain meaning to those of ordinary skill in the art and encompasses, in different embodiments, security arising from techniques such as encryption, or other types of software or hardware control used to isolate information from the public or to protect it against unauthorized access or operation. The expressions "secure communication" and "secure communication link" refer to communications that are encrypted using public/private key pairs, or symmetrical key encryption with keys shared between communicating points, to preserve confidentiality and/or integrity of the transmitted data. "Secured communications" can also involve virtual private networks, and other methods and techniques used to establish authenticated and encrypted communications between the communicating points.

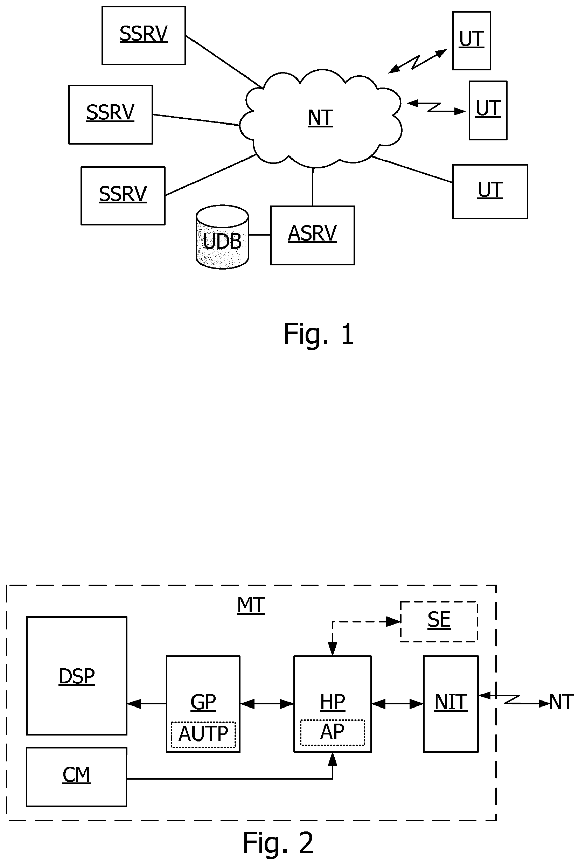

Figure 1 illustrates user terminals UT that can perform transactions with remote service provider servers or application servers SSRV through communication networks NT. In the following, the term "user terminal" shall be synonymous and refer to any device that can communicate with one or more remote servers such as application servers and service provider servers. Thus, a user terminal can be for instance a mobile phone, a smartphone, a personal computer, a digital tablet or any equipment including or associated with communication and display capabilities. Those two functionalities may also be provided by two or several devices, provided that those devices are securely associated and/or linked. The communications networks may include IP (Internet Protocol) networks, such as Internet, mobile or cellular networks, wireless networks, and any kind of network that can be used to establish a communication link between a user terminal and a remote server.

According to an embodiment, an authentication server ASRV is configured to implement a method for generating a secret key to be securely loaded in a secure element of a user, this secure element being used to sign transactions involving an application or service provider server SSRV and a user terminal UT, based on a two-factor authentication scheme.

Figure 2 illustrates a conventional terminal UT, comprising communication circuits NIT for communicating with a remote server such as the server ASRV, through a transmission network such as the network NT. The terminal UT can be a cellular phone, a smartphone or a PDA (Personal Digital Assistant) or any other device such as a digital tablet or a personal computer including communication circuits to be connected to a network such as Internet network. The user terminal UT further comprises a main processor HP (also called "Central Processing Unit" - CPU) connected to the communication circuits NIT, a display screen DSP, a graphic processor GP connected to the processor HP and controlling the display screen DSP, and a control device CM connected to the processor HP. The control device can include a keyboard or keypad, or a touch-sensitive surface, e.g. transparent and disposed on the display screen DSP. The control device CM can further include a pointing device such as a mouse, a pencil or a pen.

The terminal UT further comprises a secure element SE, such as a secure processor that can be standalone or embedded into a smartcard UICC. The secure processor SE can be for example a SIM ("Subscriber Identity Module") card, a USIM ("Universal Subscriber Identity Module"), providing an access to a cellular network, a credit card or a building or service access card. The secure processor SE can include an NFC ("Near Field Communication") circuit to communicate with a contactless reader. The NFC circuit can be standalone or embedded into a secure card (i.e. SIM-NFC) or UICC, or in a SoC ("System on Chip") circuit, or in an external smartcard or memory card, for example an "SD card".

The communication circuits NIT of the terminal UT may include a mobile telecommunication circuit giving access to a mobile cellular network and/or to the Internet network, through the cellular network, and/or a wireless communication circuit (Wi-Fi, Bluetooth™ (low energy - BLE - or not), an NFC circuit, and/or any other radio frequency or wireless communication methodology), and/or any other wired or wireless connection circuit that can be linked to a data transmission network such as Internet. The communication link between the main processor CPU of the user terminal UT and the secure element SE may be a wired link e.g. in the case of a SIM or USIM card, or a wireless link (NFC, BLE) e.g. in the case of an external smartcard or memory card. The communication link between the main processor CPU of the user terminal UT and the servers ASRV, SSRV may be performed by means of one or more data transmission networks, such as mobile networks and Internet.

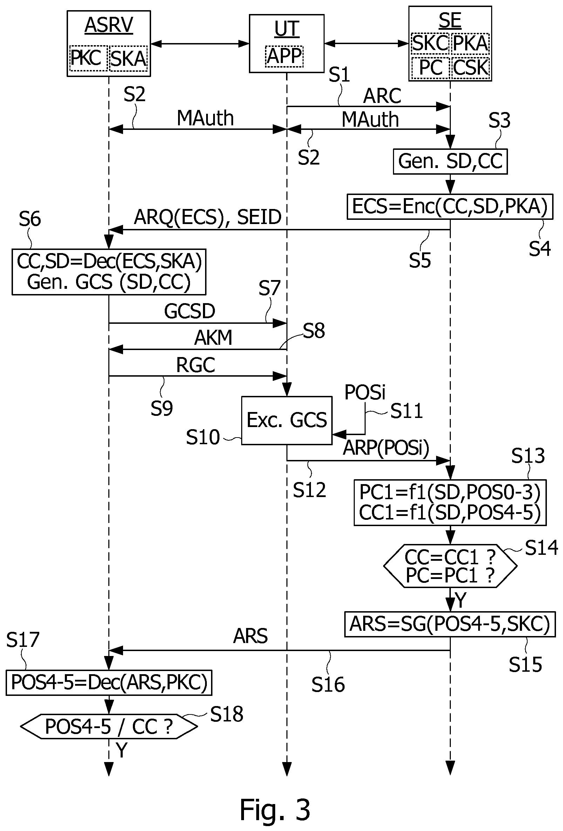

Figure 3 illustrates authentication steps S1 to S18, which are successively performed by an authentication server (e.g. the server ASRV) and a secure element (e.g. the secure element SE), before generating a new private key in the secure element, to be used for signing a transaction, according to an embodiment. The generation of the private key may require the user to be authenticated based on a password (e.g. a PIN code) and to have a secure element SE configured to securely store secret data and to perform cryptographic operations. The secure element SE also requires to be authenticated by the server ASRV. The secure element SE is for example a smartcard coupled or associated to the terminal UT using a contact, or contactless, or wireless communication link. The generation of the private key is conducted from the user terminal UT by an application APP installed on the latter.

In step S1, the application APP transmits to the secure element SE a command ARC to authenticate the user. In step S2, the secure element SE receives the request ARC and performs with the server ASRV a mutual authentication, using respective pairs of public and private keys, via the user terminal UT, each party having a public key of the other party. The mutual authentication may be triggered by the application APP which transmits a command to the secure element. This command may include a public key PKA of the server ASRV. The mutual authentication may also comprise checking certificates delivered by a trusted party, that are associated to the pairs of private and public keys of both the server ASRV and the secure element SE. The following steps S3 to S18 are performed only if the mutual authentication is conducted successfully.

In step S3, the secure element SE randomly generates a seed number SD and validation code CC, preferably of single-use. In steps S4 to S6, the secure element SE securely transmits the seed number SD and validation code CC. For example, in step S4, the secure element SE encrypts the validation code CC and the seed number SD. The encryption may be performed using the public key PKA of the server ASRV or a secret session key generated and/or exchanged by the server ASRV and the secure element SE, during or after the mutual authentication. In step S5, the secure element SE transmits the authentication request ARQ, to the server ASRV. The authentication request ARQ comprises the encrypted validation code and seed number ECS, and identification data SEID of the secure element SE.

In step S6, the authentication server ASRV receives the request ARQ, and decrypts the received encrypted validation code and seed number ECS. The authentication server ASRV generates a distinct dedicated software component GCS for the user terminal UT, using the validation code CC, the seed number SD, and data related to the user such as his name. The user data are retrieved from a database using for example the secure element identification data SEID. The software component GCS is designed to display the validation code CC. Therefore, the software component is specific to this code. In step S7, the server ASRV sends to the terminal UT structure and content data GCSD defining the software component GCS and including input data of the software component GCS in an encrypted form, a final mask to be applied to image frame parts generated by the software component, and a cryptographic data GCK to be used to execute the software component. In step S8, the application APP executed by the terminal UT receives the data GCSD related to the software component GCS, and may send an acknowledge message AKM to the server ASRV. If the application APP is not currently running on the terminal UT, the reception of the data related to the software component may trigger the execution of the application APP. In step S9, the server ASRV may send to the terminal UT a request RGC to execute the software component GCS. In step S10, the reception of the notification RGC triggers the execution by the application APP of the software component GCS which displays image frames showing for example a keypad having keys, a message MSG containing the user data and the validation code CC, for example of two or more digits.

According to an embodiment, the keys of the displayed keypad are arranged in the displayed frames according to a layout which can be determined from the seed number SD securely transmitted by the secure element SE in step S5. According to an example, only parts of labels of the keys and of the validation code are displayed in each frame, such that the key labels and the validation code CC are intelligible only to the human visual system thanks to the persistence of the latter, but not in screenshots of the display screen DSP. According to an embodiment, the validation code CC is superimposed on the message MSG (or vice-versa), such that the message cannot be changed without disturbing the validation code display.

In step S11, the user of the terminal UT inputs a password PC and the displayed validation code CC, as a function of the displayed keypad. In the example of a smartphone, the user touches corresponding positions POSi of the keys of the displayed keypad. In step S12, the application APP transmits to the secure element SE an authentication response ARP containing the sequence of positions POSi selected by the user. In step S13, the secure element SE determines a password PC1 and a code CC1 corresponding to the positions POSi typed by the user. The secure element SE shares with the server ASRV the knowledge of a function f1 determining the key layout of the displayed keypad from the seed number SD. Therefore, the secure element SE can determine from the seed number SD the displayed keypad layout and thus can determine the keys labels corresponding to the positions POSi, and consequently the values PC1, CC1 of the password and validation code typed by the user. In step S14, the secure element SE checks consistency between the typed validation code CC1 and the validation code CC generated in step S3, and between the typed password PC1 and the password PC securely stored in a memory of the secure element SE. If the typed validation code CC1 and password PC1 are consistent with the validation code CC and password PC stored in the secure element SE, the user is authenticated by the secure element SE and the latter performs the following step S15. In step S15, the secure element SE computes a signature ARS of the positions POS4-5 corresponding to the validation code CC using the private key SKC securely stored by the secure element SE. Then the computed signature ARS is transmitted to the server ASRV via the user terminal UT in step S16. In step S17, the server ASRV receives the signature ARS and decrypts it using the public key PKC corresponding to the private key SKC. In step S18, the server ASRV retrieves the validation code CC1 corresponding to the decrypted positions POS4-5, and compares the validation code CC1 with the original code CC. If the validation code CC1 and CC match, the server ASRV considers that the user was authenticated by the secure element SE.

In this way, the server ASRV authenticates the user without having to know the password PC of the user, by using data that can be sent only by the secure element SE belonging to the user. Further, these authentication steps require that the user saw the displayed images showing the keypad with a key layout corresponding to the seed number SD, the validation code CC and the user data. Further, the authentication request ARQ can only be transmitted from a trusted secure element (SE) to a trusted server (ASRV), and the software component GCS is related to the secure element SE and is only transmitted to a user terminal connected to the secure element. In addition, the server ASRV does not need to know the secret data (PC) used to authenticate the user. The software component GCS may be executed by another terminal, but without the signature ARS that can be only computed by the secure element SE, the ASRV cannot authenticate the user.

Step S3 may be performed by the server ASRV, provided that the generated secret data CC and SD are further securely transmitted to the secure element SE, for example, encrypted using a public key of the latter, before step S13. The mutual authentication performed in step S2 may be not performed since the secure element SE is authenticated in steps S15-S18.

Each time the steps S1 to S18 are performed, a new software component GCS is generated (in step S6) so as to display a new validation code CC and a keypad with a different key layout defined by a new seed number SD. Therefore, a malware installed in the terminal UT or a man-in-the-middle attack between the server ASRV and the user terminal UT cannot allow to discover the typed numbers without executing the software component. If this happens, the hacker performing the attack must send a message ARP to the secure element (as in step S12). Thus the secure element may receive two messages ARP for a same transaction or from the same user terminal UT, one from the authenticated user and one from the hacker. In this case, the secure element SE may decide to invalidate the procedure (transaction signature or secure element personalization), stop to be functional (i.e. after a number of attack detections), raise a flag or perform any other specific action related to this event.

According to another embodiment, the user terminal UT is considered to be sufficiently secure to receive the password PC of the user and to submit it to the secure element SE. In this case, steps S1 to S18 can be replaced by a simplified sequence comprising step S2 in which the secure element SE and the server ASRV performs a mutual authentication, and steps in which the user enters his password PC, the secure element SE verifies the entered password, and the secure element securely transmit to the server ASRV the result of this verification.

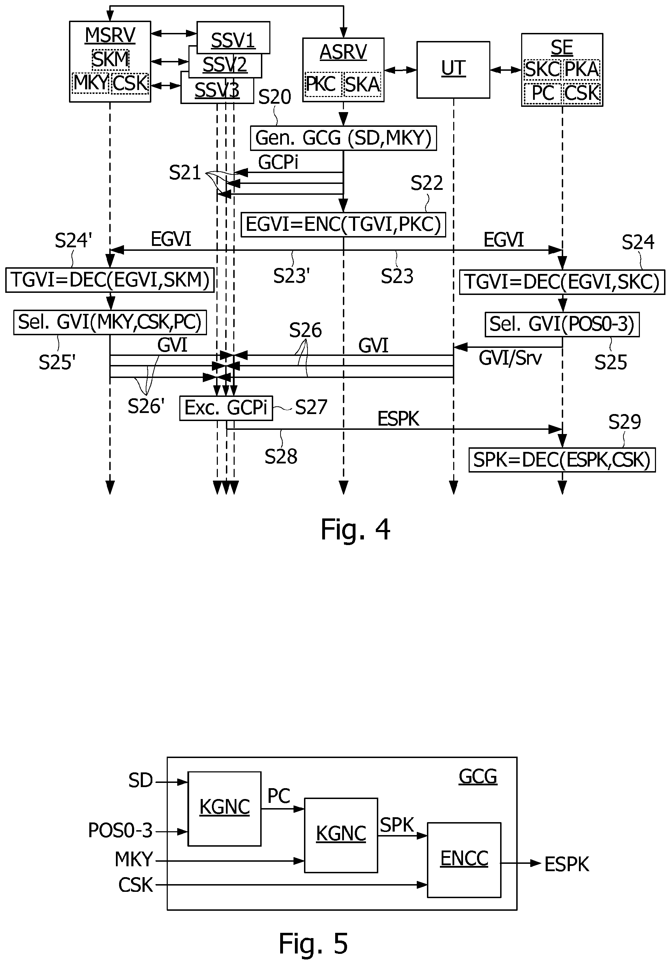

Figure 4 illustrates steps S20 to S29, which are successively performed after step S18, to generate a new private key SPK to be used for signing a transaction, according to an embodiment.

In step S20, the server ASRV generates a distinct dedicated software component GCG to be used to generate the new private key SPK. The software component GCG is configured to generate the private key SPK, encrypted by a secret key CSK of the secure element SE, e.g. a symmetric secret key CSK. The software component GCG receives as input data the seed number SD, the master key MKY, the positions POS0-3 related to the password PC and the secret key CSK. The software component GCG is configured to receive input words GVI, and defined by structure and content data. Each of the input words GVI represents a bit of the input data SD, MKY, POS0-3, CSK to be processed, which is encoded by a number of bits, for example 64 or 128 bits. In this way, each input word has only two valid values corresponding to the binary logical state 0 or 1, and all the other possible values, when considering the size in bits of the input words, are invalid. The input words GVI generated in step S20 comprises the two valid values of all the bits of the input data SD, MKY, POS0-3, CSK to be processed by the software component GCG.

More generally, each of the input data SD, MKY, POS0-3, CSK to be processed by the software component GCG is divided into data part which are encoded by words having a size greater than the size of the data parts, each word having valid values corresponding to the possible values of the corresponding data part, the other possible values of the word being invalid.

In step S21, the software component GCG is divided into several parts GCPi (with i=1, 2,...), each part being configured to receive a part of the input data GVI, and to exchange intermediate data with at least one of the other software component parts, one of the software component parts GCPi being configured to provide the encrypted private key ESPK. The structure and content data of each software component part GCPi are transmitted to a respective server SSV1, SSV2, ...

In steps S22 and S23, each input word GVI corresponding to one data part of the data POS0-3 is associated with (for example in a table TGVI):

- a data identifier for the corresponding data POS0-3,
- a position of the data part in the corresponding data POS0-3,
- the valid values of the input word,
- the values of the of data part corresponding to the valid values of the word,
- an input number of the input word in the input values GVI of the software component GCG, and
- an identifier of one of the servers SSV1, SSV2, SSV3 to which the input word must be transmitted to execute the software component GCG.

The data TGVI associated with the input words corresponding to the input data POS0-3 are encrypted using the public key PKC of the secure element SE, and transmitted to the latter, via the user terminal UT. In step S24, the encrypted valid values of the input words EGVI are received by the secure element SE and decrypted using the private key SKC corresponding to the public key PKC.

In step S25, the secure element SE selects in the decrypted data TGVI the valid values of the input data GVI to be transmitted to the servers SSV1, SSV2, SSV3 as a function of the values of the positions POS0-3 typed for the password PC. In step S26, the secure element SE transmits the selected input values GVI to the user terminal UT. The transmitted input data GVI comprise for each input word:

- the data identifier for the corresponding data POS0-3,
- the selected valid value of the input word,
- the input number of the input word in the input values GVI of the software component GCG, and
- the identifier of one of the servers SSV1, SSV2, SSV3 to which the input word must be transmitted to execute the software component GCG.

The application APP executed by the terminal UT receives the input data GVI and transmits them to their respective servers SSV1, SSV2, SSV3.

The other data (MKY, CSK) required for the execution of the software component GCG may also be provided by one or more servers MSRV securely storing these data, for example in hardware or software security modules. In this case, steps S23' to S26' similar to steps S23 to S26 are executed. Again, tables TGVI for each input data corresponding to the input data MKY and CSK are generated and encrypted using a public key of the server MSRV (in step S22), and transmitted to the latter, in step S23'. In step S24', the encrypted input data EGVI are received by the server MSRV and decrypted using private key corresponding to the public key of the server MSRV. In step S25', the server MSRV selects the input values GVI to be transmitted to the servers SSV1, SSV2, SSV3 as a function of the values of the values of the data MKY and CSK. In step S26', the server MSRV transmits the selected input values GVI to their respective servers SSV1, SSV2, SSV3. Tthe data MKY, CSK may be split in several security modules and accessible from distinct servers such as the server MSRV.

The reception of the input values GVI by the servers SSV1, SSV2, SSV3, (SSVi) triggers the execution of the software component parts GCPi by the servers SSVi, in step S27. The execution of the software component parts GCPi provides an encrypted form ESPK of the secret key SPK to be generated, which is transmitted by one of the servers SSVi to the secure element via the user terminal UT, in step S28. In step S29, the encrypted form ESPK of the secret key SPK is received by the secure element SE, decrypted and stored in a secure memory.

In this way, the generated secret key SPK is in an unencrypted form only sometimes, and only inside the secure element SE. In addition, the server ASRV which generates the software component GCG does not need to know the values of the master key MKY, the key CSK used to encrypt the secret key SPK to be generated, the positions POS0-4 typed for inputting the password PC, and the secret key SPK, encrypted or not. None of the servers SSVi can have knowledge of all the input values GVI and can determine from these input values the values of the master key, the key CSK, and the positions POS0-3. When considering the whole process from step S1 to step S28, none of the entities participating to the computations needs to know all the data used to compute the secret key SPK, and can have access to all these data.

When a new secure element SE is provided to a new user, a master key MKY, a password PC, public and private keys PKC, SKC, and an encryption key CSK are generated and stored in hardware and/or software security modules, and the secure element receives during a personalization step the password PC, the public and private keys PKC, SKC, the encryption key CSK, and an application for executing steps S2-S5, S13-S16 and S24-S26.

When the secure element is lost or stolen, a new secure element is provided to the user, this new secure element receiving the same password PC, new public and private keys PKC, SKC, and a new encryption key CSK, the master key MKY remaining unchanged, the security module storing the encryption key CSK being updated to store its new value.

According to an embodiment, the software components GCG; GCS are protected against tampering and reverse-engineering.

Figure 5 represents modules of the software component GCG. According to an embodiment, the software component GCG receives in input the seed number SD, the positions POS0-3 typed for the password PC, the master key MKY and the encryption key CSK. The software component GCG comprises a module KLYC for determining the password PC from the typed positions POS0-3 and the seed number SD, a module KGNC for generating the secret key SPK from the master key MKY and the password PC, and an encryption module ENCC for encrypting the secret key SPK using the key CSK. The module KLYC performs the function f1 used in step S13.

According to an embodiment, the module ENCC implements a symmetric encryption algorithm such as AES (Advance Encryption Standard) encryption algorithm.

According to another embodiment, the module ENCC implements an asymmetric encryption algorithm. In this case, the public key PKC of the secure element SE can be an input of the circuit GCG to encrypt the secret key SPK in place of the key CSK. Since it is public, the key PKC may be provided in an encoded form (input words GVI) by the server ASRV to the servers SSVi for the execution of the software parts GCPi.

According to another embodiment, the password PC is not transmitted by the secure element SE by the positions POS0-3, but by the server MRSV or another server by executing steps similar to steps S23' to S26', the password PC being securely stored in a hardware or software security module. In this case, the software component GCG does not comprise the module KLYC.

According to another embodiment, the data SD and/or MKY are embedded within the software component GCG, and used for generating the latter. In this case, the data SD and MKY are not input data of the software component GCG.

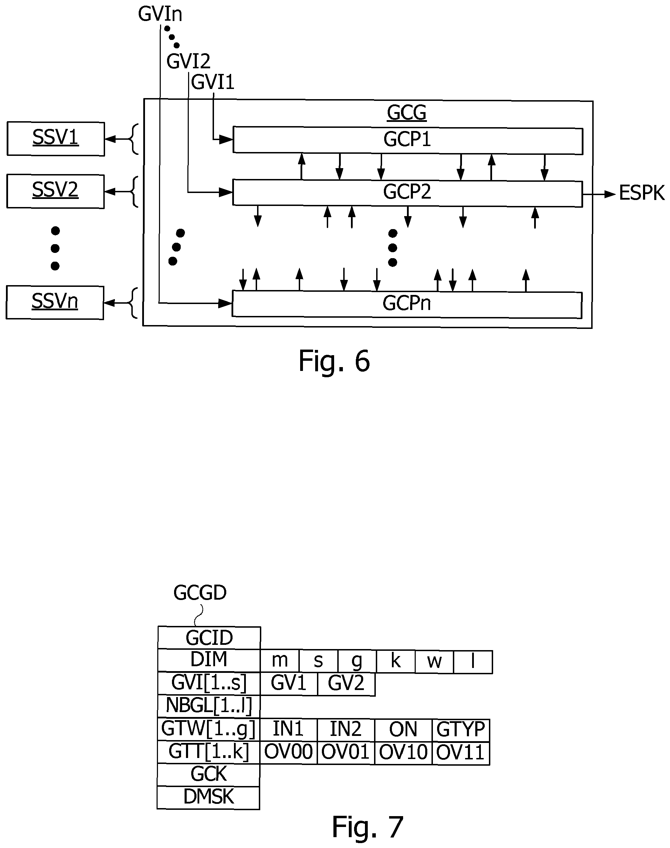

Figure 6 represents the software component GCG and the parts GCPi (with i=1, 2, ...n), which are executed respectively by the servers SSVi. According to an embodiment, each module KLYC, KGNC and ENCC of the software component GCG is distributed over several of the parts GCPi, and one or more of the parts GCPi provide the encrypted secret key ESPK. As a result, the input data GVI (SD and POS0-3 or PC, MKY, CSK) are also distributed over the parts GCPi. The input data provided by the server MSRV or other servers may be split into several security modules, such that each of the security modules correspond to one respective server of the servers SSV1-SSVn. When the software component GCG is executed, each security module provides the input data it stores to the corresponding server SSV1-SSVn.

According to an embodiment, the parts GCPi send and receive data from the other parts throughout their execution. When one of the servers SSV1-SSVn transmits an intermediary data to another of the servers SSV1-SSVn, the intermediary data is transmitted with the other valid value of the transmitted data, the position of the value of the intermediary data with respect to the other valid value being known from the receiving server. In this way, the observation of the data exchanged between the servers cannot be exploited to determine the secret key SPK. According to another embodiment, the servers SSV1-SSVn may have established secure communication channels between them to transmit the intermediary data.

According to an embodiment, the software component GCG is executed once and modified (at step S20) at each execution when the secret key SPK must be generated again. In addition, the seed number SD and therefore the typed positions POS0-3 are changed at each generation of the secret key SPK. Therefore the first software component GCG generated for a user and secure element can be stored by the server ASRV. When the secret key SPK must be generated again, the module KLYC has to be generated again in step S20 with a new seed number SD.

According to an embodiment, the division of the software component into the parts GCPi is changed at each execution of the software component GCG. Therefore, the combination of observations of several executions of the software component GCG cannot enable to determine the secret key SPK.

According to an embodiment, the software component GCG and/or GCS are/is protected against tampering and reverse-engineering.

According to an embodiment, the software component GCG is designed as a garbled circuit which is a Boolean circuit comprising logic gates arranged in circuit layers of logic gates that can be executed in parallel before executing a next circuit layer. Figure 7 illustrates the structure and content data GCGD defining the software component (which is generated in step S20), when it is designed as a garbled circuit, according to an embodiment. The data GCGD comprises:

- a unique software component identifier GCID,
- a number set DIM comprising a number s of input values of the circuit GCG, a number m of output values, a number g of logical gates of the circuit, a number w of wires in the circuit GCG, and a number 1 of circuit layers in the circuit GCG,
- an input data table GVI comprising values of the input words GVIi of the circuit GCG, the input words being numbered from 1 to s, as specified for the execution of the software component GCG,
- a gate wire table GTW defining two input wires numbers IN1, IN2, an output wire number ON and a type identifier GTYP of each logic gate of the software component GCG, the gates of the circuit being numbered from 1 to g, and
- a gate truth table comprising four values OV00, OV01, OV10, OV11 for each of the logic gates of the software component GCG.

The number "s" corresponds to the total number of bits of all input words encoding the input data SD, POS0-3 (or PC), MKY, CSK. The number m of output values corresponds to the number of bits of the encrypted secret key ESPK.

In the example of Figure 7, the type GTYP specifies that the corresponding logic gate performs either an XOR operation or another logical operation such as AND, OR, NOR, NAND.

According to an embodiment, the table GVI of input words, when the software component GCG is generated, contains both valid values GV1, GV2 corresponding respectively to the logical states 0 and 1, of each of the input word GVIi. Each valid value GV1, GV2 can be equal with a same probability to either one or the other of the two valid values of the input word GVIi corresponding respectively to the states 0 and 1. When the software component GCG is executed by the servers SSVi, the table GVI which is dispatched between the servers contains only one of the valid values GV1, GV2 of each input word, corresponding to the values of the input data SD, POS0-3, MKY and CSK of the software component GCG.

According to an embodiment, the input words GVIi, and the output values of the logic gates of the software component GCG, each representing a binary logical state 0 or 1, are defined by numbers of several bits, for example 64 or 128 bits. In this way, each input and output within the garble circuit GCG has only two valid values, and all the other possible values, when considering the size in bits of these values, are invalid. When the software component GCG is generated, the two valid values of each input SD POS0-3, MKY, CSK of the software component GCG are randomly chosen, provided that the least significant bit of the two valid values are different, these least significant bits being used, when computing the output value of one of the logic gates, to select one value in the truth table of the logic gate.

The truth table GTT[i] of each logic gate of the circuit GCG, comprises four values OV00, OV01, OV10, OV11, each corresponding to a combination (0, 0), (0, 1), (1, 0), (1, 1) of binary input values corresponding to the input values of the logic gate. The topology of the software component GCG may be defined in the table GTW, by numbering each wire of the software component, i.e. each input wire of the software component from 1 to s and each output of the logic gates from (s+1) to (s+g), and by associating to each logic gate of the circuit GCG one record of the table GTW comprising two wire numbers IN1, IN2 to the two inputs of the gate and one wire number ON to the output of the gate. The wire numbers of the outputs of the software component GCG are numbered from (s+g-m+1) to (s+g).

The XOR gates of the circuit GCG can be executed, either by using a truth table which is encoded in the table GTT, or by applying XOR operations to each pairs of bits of same rank in the input values of the gate. In the latter case, the field GTYP of the table GTW defines whether the gate is a XOR gate or another gate, and the table GTT comprises one record for each gate distinct from an XOR gate only.

According to an embodiment, the order of the logic gates in the gate tables GTW, and GTT can be defined randomly, provided that the table records GTW[i] and GTT[i] at the index i refer to the same gate.

According to an embodiment, each value in the tables GVI and GTT is encoded by a 128-bit word, and each record of the table GTW is encoded on a 64-bit word, the wire numbers IN1, IN2, ON being encoded on 21-bit words. The division of circuit GCG into the parts GCPi is performed by dividing the structure and content data GCGD into parts each comprising a part of the tables GVI, GTW and GTT. The parts of the structure and content data GCGD are transmitted from the server ASRV respectively to the server SSV1-SSVn. The parts of the table GTW can be transmitted from the server ASRV to the servers SSVi in a compressed form, for example using the zip compression scheme.

According to an embodiment, the generation of a new software component GCG in step S20 can be performed from a previously executed and stored software component by modifying the order of the input data in the table GVI, which requires changing in consequence the order of the data in the other tables. The valid values of the data in the software component can be also randomly generated again.

To execute the software component parts GCPi, each of the servers SSVi, comprises a dedicated interpreting module configured to successively execute each layers of logic gates of the software component part GCPi, as defined in the corresponding structure and content data part. The first circuit layer receives input values of the input words GVI, a second circuit layer receives outputs values of the logic gates of the first circuit layer, and a last circuit layer provides the output values of the software component part GCPi. The interpreting module executes successively each circuit layer of logical gates, from the first layer to the last one. To this purpose, the interpreting module can use a wire table receiving the value of each wire of the software component part GCPi, written in the table at an index corresponding to the wire number of the wire value. The wire table is first loaded with the input values GVIi of the software component part, written in the table at indexes (between 1 and s) corresponding to wire numbers assigned to the input words. Then the computed output value of each executed logic gate is written in the wire table at an index corresponding to the wire number of the output value. At the end of the execution of software component part providing the encrypted secret key ESPK, the wire table comprises the values of the outputs of the software component at indexes from (s+g-m+1) to (s+g).

The output value of each logic gate can be computed by applying a non-reversible function applied to both input values of the gate and to one value selected in the truth table of the gate, as a function of the least significant bit of each of the two input values:

$$OV = PF1(IN1, IN2, G) \tag{1}$$

where IN1 and IN2 represent the input values of the gate, G = GTT[IN1{0} // IN2{0}], IN1{0} and IN2{0} represent the least significant bit of the input values IN1, IN2, "//" represents the bit concatenation operator, GTT represents the four-element truth table of the gate, and PF1 represents the non-reversible function.

According to an embodiment, the function PF1 can use an encryption function such as AES (Advanced Encryption Standard) using an encryption key assigned to the software component. In this case, the encryption key GCK can be stored in the structure and content data GCGD of the software component GCG. For example, the output value OV of a logic gate can be computed as follows:

$$OV = AES(GCK,K) \oplus K \oplus G \tag{2}$$

with K = CF(IN1,IN2) $\oplus$ T, "$\oplus$" represents the Exclusive OR (XOR) operator, T represents a number assigned to logic gate, for example the number of the logic gate, and can also depend on the values of the inputs IN1, IN2, CF represents a combination function, and AES(GCK,K) represents an encrypted value of K by the AES encryption algorithm using the encryption key GCK. The combination function can be an XOR operation or an operation in the form:

$$CF(IN1,IN2) = SH(IN1,a) \oplus SH(IN2,b), \qquad (3)$$

SH(X,a) representing a left shift operation of X by a number "a" of bits.

The least significant bit of each output data of the software component GCG provided by the interpreting module is considered as a bit value of the encrypted secret key ESPK.

To extract the encrypted secret key ESPK from the computed output values of the software component GCG, the dedicated module of the server (SSV2 in the example of figure 3) providing the encrypted secret key ESPK, combines each output value (least significant bit of each output value provided by the software component part) with a respective mask bit value belonging to a decoding mask DMSK provided in the structure and content data GCGD. The combination operation used can be an XOR operation. The respective least significant bits of the output values of the software component GCG represents white noise since the output values of the software component including the least significant bit thereof are randomly chosen. Thus the output values generated by the software component are in an encrypted form, and can be decrypted using the decoding mask DMSK.

According to an embodiment, the decoding mask DMSK is transmitted by the server ASRV only to the secure element SE, for example in step S23, and only the output values of the software component GCG are transmitted by the server SSV2 to the secure element in step S28, the secure element SE being configured to perform the extraction of the encrypted secret key ESPK from the computed output values of the software component GCG. To reduce the volume of data transmitted to the secure element SE in step S28, only the least significant bits of the output values may be transmitted from the server SSV2 to the secure element SE.

According to another embodiment, the decoding mask DMSK is transmitted to the server SSV2 providing the output values of the software component GCG, and the server SSV2 transmits the encrypted secret key ESPK to the secure element SE via the user terminal UT.

The following is a detailed description of steps S6 and S10 in which the software component GCS is generated and executed.

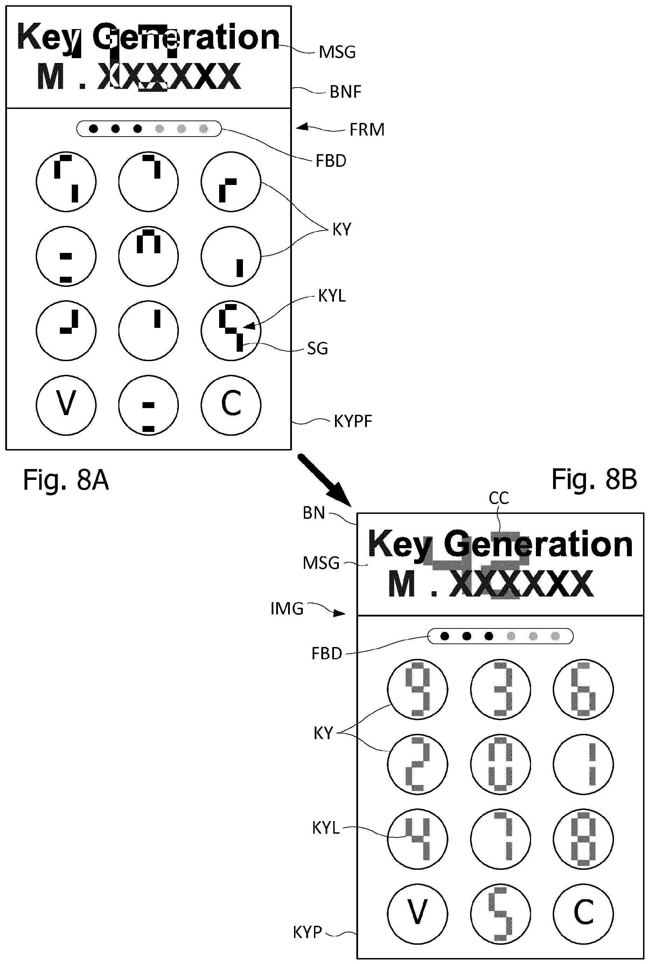

Figure 8A illustrates an example of an image frame FRM displayed by the user terminal UT when it executes the software component GCS. The image frame FRM comprises a banner frame BNF displaying the message MSG and the single-use code CC superimposed on the message MSG. The image frame FRM further comprises a keypad image frame KYPF showing for example a twelve-key keypad, each key of the keypad being displayed with a label KYL indicating the function of the key to the user. The keypad comprises an erase key "C" and a validation key "V", and ten keys corresponding to a digit, and having a layout specific to the software component GCS which generates the image frame FRM. The image frame FRM may further comprises a display zone FBD where a dot is displayed each time the user touches a new one of the keys KY. In the example of Figure 8A, the display zone FBD shows that three keys were already typed by the user.

In the example of Figure 8A, the keypad comprises four lines of three keys, the first line of the keypad comprising (from left to right) the digits "9", "3" and "6", the second line comprising the digits "2", "0" and "1", the third line comprising the digits "4", "7", and "8" and the fourth line, the validation key "V", the digit "5" and the erase key "C". The label KYL of each digit key is displayed by several segments SG (e.g. seven segments), visible or not, according to the key label KYL to be displayed. According to an embodiment, to prevent the keypad layout from being acquired using a screenshot function of the terminal UT, only a part of the visible segments in each key KY is displayed in each image frame generated by the software component GCS. To this purpose, each visible segment to be displayed is present in an image frame FRM generated by the software component GCS with a probability lower than 100%, for example equal to 50%. Thanks to its persistence property, the human visual system combines the image frames successively displayed by the terminal UT. Thus the displayed key labels KYL become intelligible to the user, but cannot be captured using a screenshot function. Figure 8B illustrates the displayed image IMG as it is perceptible by the human visual system when the image frames FRM generated by the software component GCS are displayed at a sufficiently high frequency (greater than 30 Hz) for example at 60 Hz, such that a new frame generated by the software component is displayed every 16.6 ms. As shown in the example of Figure 8B, the key labels KYL appear in grey to a user when visible segments to be displayed of the key labels are inserted in the frames FRM with a probability lower than 100%.

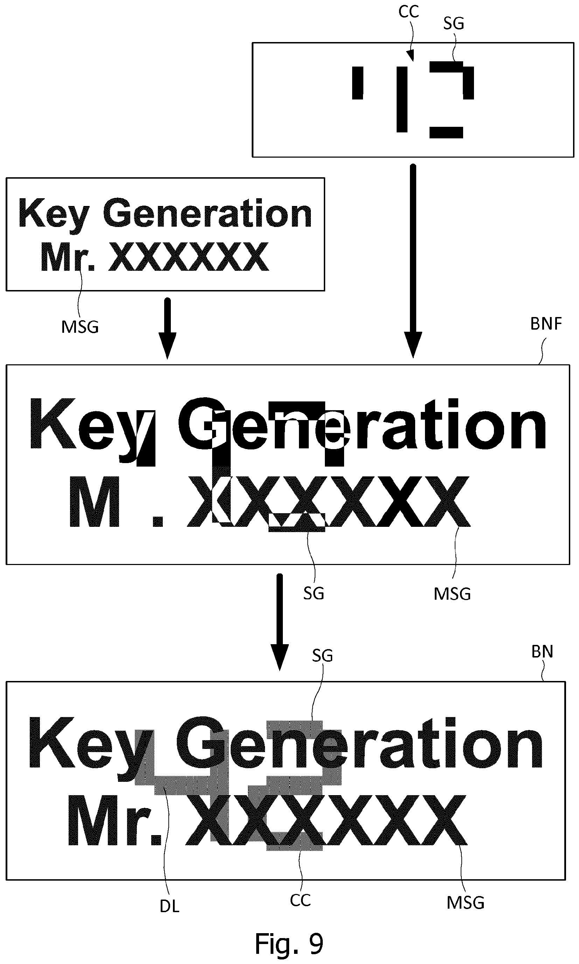

Figure 9 at the top shows one example of two superimposed layers of the banner frame BNF produced by the software component GCS and displayed by the terminal UT. The central part of Figure 9 shows the banner frame as it is generated and displayed. The bottom part of Figure 9 shows the banner BN as it can be perceived by the user. The first layer of the banner frame BNF (at the top left of Figure 9) comprises the message MSG "Key Generation - Mr.

XXXXXX" to be displayed, "XXXXXX" being the name of the user. The second layer (at the top right of Figure 9) comprises a two-digit number corresponding to the validation code CC to be entered by the user in the terminal UT. Each digit of the validation code CC is displayed using several segments SG (e.g. seven segments) which are displayed or not as a function of the digit to be displayed. To prevent the validation code CC from being acquired using a screenshot function of the terminal UT, only a part of the visible segments SG is displayed in each image frame FRM generated by the software component GCS, such that each visible segment SG to be displayed is present in an image frame FRM generated by the software component GCS with a probability lower than 100%, for example equal to 50%. The pixels of the first and second layers may be combined together by a XOR operation. Thus, in the generated banner frame BNF as shown in the central part of Figure 9, the pixels belonging both to the message MSG and to a segment of the validation code CC, are displayed in the background color, when the message and the segment are displayed in a color different from the background color.

The bottom part of Figure 9 illustrates the displayed banner BN as it is perceptible by the human visual system, when the image frames FRM generated by the software component are displayed at a sufficiently high frequency (greater than 30 Hz) for example at 60 Hz, such that a new frame FRM is displayed every 16.6 ms. The two digits labels DL of the validation code CC appear in grey (in the example of Figure 9) to the user, when visible segments to be displayed are inserted in the banner frames BNF with a probability lower than 100%.

According to an embodiment, visible and invisible segments of each digit KYL, DL to be displayed appear in the frames FRM with respective probabilities such that the displayed digits are intelligible for the human visual system, thanks to the persistence of the latter. For example, the generated software components GCS are configured to display the invisible segments with a probability of 0 to 15%, and the visible segments with a probability of 50 to 100%. The visible segments forming a key label KYL or a digit of the validation code CC can be displayed with respective probabilities comprised between 50 and 100%, and the invisible segments in a key label or a digit of the validation code CC can be displayed with respective probabilities comprised between 0 and 15%. The display probabilities of the segments forming the digits of the key labels and the validation code CC can be adjusted as a function of the frame display frequency, such that the labels of the displayed digits remain intelligible for the human visual system. Segments or pixels are invisible or visible in the image frame FRM when they are displayed respectively with a background color of the image frame, or with a color different from the background color. The background color is defined by the color of the pixels around the considered segment SG, and may vary as a function of the position of the segment within the image frame FRM.

The displayed keypad KYPF may not need to have a validation key "V", the validation of the typed codes being performed when the user inputs the last digit of the password PC and validation code CC to be typed. For example, if the password PC comprises four digits and the validation code CC two digits, the execution of the software component GCS can be ended when the user inputs six digits. The cancel key "C" can be managed either to delete the last typed digit or all the previously typed digits. The effects of the cancel key "C" may be shown to the user by erasing one or all dots in the display zone FBD.

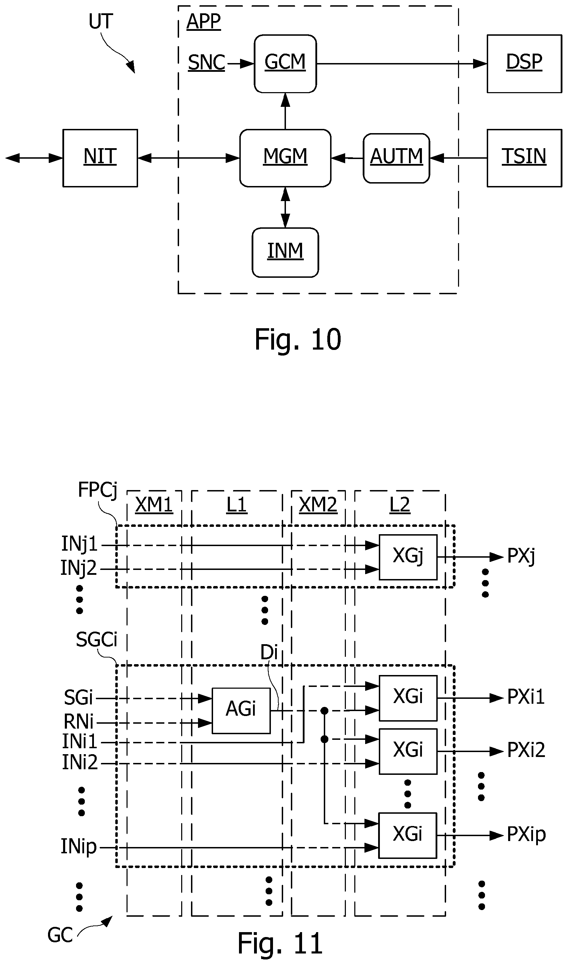

Figure 10 illustrates a functional architecture of the application APP, according to an embodiment. The application APP comprises a management module MGM, an initialization module INM, an authentication module AUTM, and a software component execution module GCM. The management module MGM controls the other modules INIM, RGM and GCM, and the communications between the application APP, the secure element SE and the server ASRV, through the communication circuits NIT. The authentication module AUTM performs step S1 to trigger a user authentication, step S3 to trigger the mutual authentication between the server ASRV and the secure element SE, step S8 to trigger the execution of the software component GCS, and to receive and transmit the positions POSi typed by the user (step S12 and step S16). The module AUTM is connected to the keypad or a touch-sensitive surface TSIN of the terminal UT. The module GCM performs the step S10 to execute the software component and generate and display the image frames FRM at a suitable refresh rate, the module GCM selecting at each frame, input values to be applied to the software component GCS and executing the latter. The module GCM produces the image frames FRM which are displayed on the display screen DSP of the terminal UT.

Figure 11 illustrates an example of a software component GCS according to an embodiment. The software component GCS is a software-implemented Boolean circuit encrypted as a garbled circuit. The software component GCS comprises two circuit layers L1, L2, and two interconnection matrices XM1, XM2. A first interconnection matrix XM1 receives input data INi, INj, SGi, RNi of the software component GCS. The first layer L1 comprises logic gates AGi, each gate receiving two input values SGi, RNi from the matrix XM1 and providing one output value Di to the second interconnection matrix XM2. The second layer L2 comprises logic gates XGi, XGj, each gate receiving two input values from the matrix XM2, and providing one output value PXi, PXj representing a pixel value. Each of the logic gates AGi of the first layer L1 receives input values SGi, RNi of the software component GCS, selected by the matrix XM1. Each of the logic gates XGi of the other layer L2 receives one input value INi of the software component and one output value provided by one logic gate AGi belonging to a previous layer (L1), these input values being selected by the matrix XM2. Each of the logic gates XGj of the layer L2 receives two input values INj1, INj2 of the software component, these input values being selected by the matrix XM1 and/or XM2. This structure of the software component enables parallel processing, since all logic gates in a same circuit layer L1, L2 can be processed at the same time.

According to an embodiment, to generate image frames FRM as shown in Figure 8A, the software component GCS comprises one circuit SGCi for each of the segments SG that can be visible or invisible in the image frames FRM, and one circuit FPCj for each pixel PXj distinct from a segment pixel PXi, for example around the segments SG or in the banner frame BNF. Thus, in the example of Figure 8A, the image frames FRM to be displayed comprise 70 segments (10 key label digit x 7 segments per digit) for the keypad KYP, plus 14 segments (2 digits x 7 segment per digit) for the validation code CC, the software component comprises 84 circuits SGCi. Each of the circuits SGCi comprises one logic gate AGi in the circuit layer L1, and as much logic gates XGi in the circuit layer L2, as the number of pixels PXi1, PXi2, ... PXip forming the segment SG as displayed in the image frames FRM.

The gate AGi performs for example a logical operation such as AND, OR, NAND, NOR, to display each visible segment with a probability of 50%, and each invisible segment with a probability of 0% to be visible. Each of the gates XGi performs a logical XOR operation with an input INi of the software component. The gate AGi receives one segment input value SGi and a corresponding random input value RNi. The output Di of the gate AGi is connected to an input of all gates XGi of the circuit SGCi. Each gate XGi also receives one of the input values INi1-INip and provides one pixel value PXi1-PXip to the output of the circuit GCS.

Each of the circuits FPCj comprises one logic gate XGj performing a logical XOR operation per pixel PXj controlled by the software component GCS and distinct from a segment pixel in the image frames FRM. Each of the gates XGj receives two input values INj1, INj2 of the software component GCS and provides one pixel value PXj. Each of the gates XGj can be located either in layer L1 or in layer L2. The number of input values INi, INj can be limited to a value around the square root of the number of pixels PXi, PXj controlled by the software component GCS.

The circuits SGCi are configured to display the visible segments of the digits of the key labels KYL and validation code SG with a probability of 50% and the invisible segments of these digits with a probability of 0%. The structure of the software component GCS can be adapted to apply other display probabilities to the visible and invisible segments of the digits to be displayed. Of course, the digits can also be controlled and/or arranged (e.g. with more segments) to display other signs than numbers such as alphabetic characters or more generally symbols including ASCII characters.

In the example of the software component of Figure 11, one input INi or INj can be connected to several logic gates XGi, XGj, such that there are fewer inputs INi, INj than the number of logic gates XGi plus twice the number of logic gates XGj.

The interconnection matrix XM2 defines which pixel generated by the software component belongs to a segment SG. According to one embodiment, the position, orientation and shape of each segment SG are varied by one or several pixels, depending on the display resolution of the user terminal, from one software component to another. This provision makes it more difficult to perform a machine optical recognition of the displayed symbols.

It may be observed that the term "segment" as used herein designates a set of pixels that are controlled by a same one of the segment input values SGi. The set of pixels forming a segment is not necessarily formed of adjacent pixels, but can comprise groups of adjacent pixels as the segments forming a key label KYL. In addition, the pixels forming a segment are all visible or all invisible in one displayed image frame FRM.

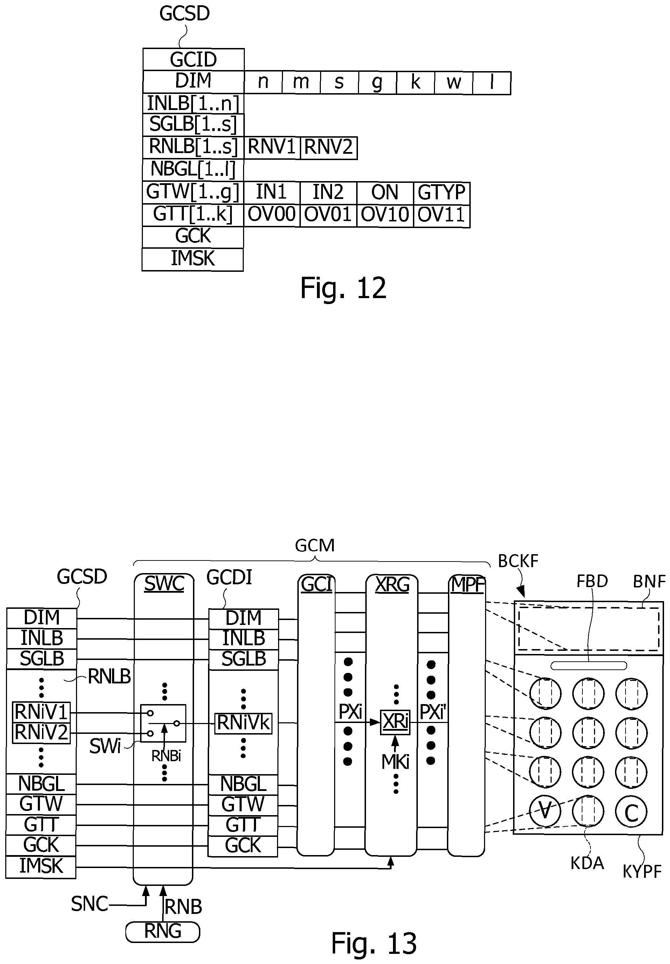

Figure 12 illustrates the structure and content data GCSD defining the software component GCS (which is transmitted in step S7), when it is designed as a garbled circuit, according to an embodiment. The data GCSD comprises:

- a unique software component identifier GCID,
- a number set DIM comprising a number n of input values INi, INj, a number of output values m, a number s of segment input values SGi or random input values RNi, a number g of gates AGi, XGi, XGj, a number k of gates AGi, a number w of wires in the circuit, and a number 1 of circuit layers L1, L2 in the circuit GCS,
- an input data table INLB comprising all values of the inputs INi, INj of the circuit GC, for example numbered from 1 to n, as specified for the execution of the software component,
- a segment table SGLB comprising all values of the segment inputs SGi of the software component GCS, numbered from 1 to s, as specified for the execution of the software component,
- a random data table RNLB comprising the random values RNi, numbered from 1 to s,
- a gate wire table GTW defining two input wires numbers IN1, IN2, an output wire number ON and a type identifier GTYP of each logic gate AG, XG of the software component GCS, the gates of the circuit being numbered from 1 to g, and
- a gate truth table comprising four values OV00, OV01, OV10, OV11 for each of the logic gates AG of the software component GCS.

In the example of Figure 12, the type GTYP specifies that the corresponding logic gate performs either an XOR operation or another logical operation such as AND, OR, NOR, NAND.

According to an embodiment, the input values INi, SGi, RNi, INj and the output values Di, PXi, PXj of the logic gates AGi, XGi, XGj, each representing a binary logical state 0 or 1, are defined by numbers of several bits, for example 64 or 128 bits. In this way, each input and output within the garble circuit GCS has only two valid values, and all the other possible values, when considering the size in bits of these values, are invalid. When the software component GCS is generated, the two valid values of each input SGi, RNi, INi, INj of the software component are randomly chosen, provided that the least significant bit of the two valid values are different, these least significant bits being used, when computing the output value of one of the logic gates, to select one value in the truth table of the logic gate.

The truth table GTT[i] of each logic gate AGi, comprises four values OV00, OV01, OV10, OV11, each corresponding to a combination (0, 0), (0, 1), (1, 0), (1, 1) of binary input values corresponding to the input values of the logic gate. The topology of the software component may be defined in the table GTW, by numbering each wire of the software component, i.e. each input wire of the software component from 1 to (n+2s) and each output of the logic gates from (n+2s+1) to (n+2s+g), and by associating to each logic gate AGi, XGi, XGj one record of the table GTW comprising two wire numbers IN1, IN2 to the two inputs of the gate and one wire number ON to the output of the gate. The wire numbers of the outputs of the software component GCS are numbered from (n+2s+g-m+1) to (n+2s+g).

According to an embodiment, the table RNLB contains both valid values RNV1, RNV2 corresponding respectively to the logical states 0 and 1, of each of the random input values RNi. Each value RNV1, RNV2 can be equal with a same probability to either one or the other of the two valid values of the random value RNi corresponding respectively to the states 0 and 1.

The XOR gates XGi, XGj can be executed either by using a truth table which is encoded in the table GTT or by applying XOR operations to each pairs of bits of same rank in the input values of the gate. In the latter case, the field GTYP of the table GTW defines whether the gate is a XOR gate or another gate, and the table GTT comprises one record for each gate AGi only.

According to an embodiment, each value in the tables INLB, SGLB, RNLB, GTT is encoded by a 128-bit word, and each record of the table GTW is encoded on a 64-bit word, the wire numbers IN1, IN2, ON being encoded on 21-bit words. The table GTW can be transmitted from the server ASRV to the terminal UT in a compressed form, for example using the gzip compression scheme.

According to an embodiment, the order of the logic gates in the gate tables GTW, and GTT can be defined randomly, provided that the table records GTW[i] and GTT[i] at the index "i" refer to the same gate.

Figure 13 illustrates the module GCM, configured to execute a software component and to generate the image frames FRM, according to an embodiment. The module GCM executes the software component each time a new image frame is to be generated, i.e. at a frame refresh rate equal to or greater than 30 Hz. To this purpose the module GCM can be activated by a synchronization signal SNC having for example a rising edge each time a new image frame must be generated. The module GCM comprises a switching module SWC, a software component interpreter GCI, an XOR masking circuit XRG and a pixel mapping module MPF. The switching module SWC receives the synchronization signal SNC and the structure and content data GCSD defining the software component GCS to be executed, and loads the data to be processed by the next execution of the software component GCS in an input data structure GCDI. Thus, the switching module SWC transmits the data DIM, INLB, SGLB, NBGL, GTW, GTT and GCK without modification to the structure GCDI.

According to an embodiment, the switching module SWC performs switching operations SWi to select one or the other of the two valid values RNiV1, RNiV2 of each input random value RNi. Each switching function SWi is controlled by a respective bit RNBi of a random number RNB having s bits, generated by a random number generation function RNG, s being the number of the random values RNi to be input to the software component GCS or the total number of segments SGi of all the digits to be displayed. Each switching operation SWi provides for each of the random values RNi a randomly selected value RNiVk which is stored in the structure GCDI. As a result of the selection of one of the two valid values RNiV1, RNiV2 of the random values RNi (the visible segments SG to be displayed corresponding to an input data SGi set to the state one), the output of the corresponding AND gate AGi is set to state either 0 or 1, depending on the logical state of the selected random value RNiVk. As a consequence, the visible segments SGi appear in each frame FRM with a probability equal to the probability of the random input value RNi to be set to state 1. If the number RNB is a true random number, this probability is equal to 50%.

The module GCI is a dedicated interpreting module configured to successively execute each of the logic gates of the first circuit layer L1, as defined by the data in the input data structure GCDI, and then each of the logic gates of second circuit layer L2. To this purpose, the interpreting module GCI can use a wire table receiving the value of each wire of the software component GCS, written in the table at an index corresponding to the wire number of the wire value. The wire table is first loaded with the input values INi, INj, SGi, RNiVk of the software component, written in the table at indexes (between 1 and n+2s) corresponding to wire numbers assigned to the input values. Then the computed output value of each executed logic gate is written in the wire table at an index corresponding to the wire number of the output value. At the end of the software component execution, the wire table comprises the values of the outputs of the software component at indexes from (n+2s+g-m+1) to (n+2s+g). The computations of the outputs of the logic gates can be performed as for the software component GCG.

The least significant bit of each output data of the software component GCS provided by the module GCI is considered as a pixel value PXi, PXj. The module XRG combines each pixel value PXi (least significant bit of each output value provided by the software component) with a respective mask bit value MKi belonging to an image mask IMSK provided in the structure and content data GCSD. The combination operation used can be an XOR operation XRi. The respective least significant bits of the output values PXi, PXj of the software component represents white noise since the output values of the software component including the least significant bit thereof are randomly chosen. Thus the image parts generated by the software component are in an encrypted form, and are decrypted using the image mask IMSK.

The image mask IMSK comprises the message MSG, such that when combined with the pixels PXj provided by the software component GCS, the message MSG becomes intelligible and combined with segments SG of the validation code CC. The image mask IMSK can also be configured to make visible the pixels PXi of a digit segment SG corresponding to a segment input value SGi fixed to the binary state 0 (segment configured to be invisible). In this way, the segment is always visible (with a probability of 100%) in the generated image frames FRM. Another way to configure a segment always visible or invisible is to attribute a same value to the two random values RNiV1, RNiV2 corresponding to the related segment input value SGi in the transmitted structure and content data GCSD.

According to one embodiment, the final mask IMSK is transmitted to the terminal UT in step S7 (figure 3) using another communication channel, for higher security.

According to one embodiment, the final mask IMSK is generated by the secure element SE as a function of user data transmitted in step S1 (Figure 3), and transmitted to the user terminal UT before the latter executes the software component in step S10. The user terminal UT may also transmit a request for the final mask IMSK to the secure element SE, the request comprising the user data (or the message MSG) that are needed to generate the mask IMSK to display the message MSG. In this way, a terminal without the secure element SE cannot display the image frame FRM. Alternately or in combination, other data needed to execute the software component GCS may be stored and provided to the terminal UT by the secure element SE before the terminal UT executes the software component GCS in step S10. These data may be previously and securely transmitted by the server ASRV to the secure element SE. According to an example, the cryptographic data GCK needed to execute the software component GCS may be provided by the secure element SE to the user terminal UT.

The interconnection matrices XM1, XM2 define where the pixels PXj corresponding to the input values INj and the pixels PXi corresponding to the segment input values SGi are displayed in the image frames FRM. The input values INi, INj define in relation with the image mask IMSK if the corresponding pixel PXi, PXj in output of the software component GCS is visible or invisible, the visibility of the pixels PXi depending also on the corresponding value of the random input RNi. The respective binary states of the input values INi, INj can be randomly selected at the time the software component is generated, the image mask IMSK being then generated as a function of the selected binary states of the input values INi, INj, the interconnection matrices XM1, XM2 and the image frame FRM to be displayed which defines the visible and invisible pixels in the image frame.

The mapping module MPF inserts groups of pixels values PXi' provided by the module XRG, at suitable positions into a background image frame BCKF to generate one of the image frames FRM to be displayed. In particular, the module XRG provides a group of pixels PXi' which forms the banner frame BNF as shown in Figures 8A, 9, and groups of pixels PXi' which form each of the key labels KYL of one keypad frame KYPF to be displayed in a frame FRM. The mapping module MPF inserts these groups of pixels in respective predefined locations in the background image frame BCKF to generate one of the image frames FRM as shown in Figure 8A. In one embodiment, the module XRG outputs a directly displayable image frame. In this case, the mapping module is not mandatory.

The transmission of the two valid values of the random inputs RNi in the structure and content data GCSD of the software component GCS, enables introduction of randomness in the execution and output data of the software component at a very low cost. In contrast, a software component producing random output data would require to introduce a random generator in the software component, which cannot be obviously realized without adding complexity to the garbled circuit, and thus without increasing the size of the structure and content data GCSD defining the software component. In addition, the transmission of the two valid values RNiV1, RNiV2 of the random inputs RNi does not reduce the security of the introduction of the password PC and validation code CC, since the correspondence between each random input value RNiV1, RNiV2 and a binary value 0 or 1 thereof cannot be established easily.

According to one embodiment, each time the terminal UT has to perform a new authentication, a new software component GCS displaying a keypad KYP with a different key layout and displaying a different validation code CC, is executed in step S10.

In the embodiment using garbled circuits, the generation of the software components GCG, GCS, performed by the server ASRV in step S6 and S20, comprises generating random values representing the binary states 0 and 1 of the input bits and of the output bits of the logic gates of the software component, some of the logic gate outputs corresponding to outputs of the garbled circuit. The generation of a software component further comprises randomly selecting the topology of the garbled circuit, such as the interconnection matrices XM1, XM2 in the garbled circuit GCS, i.e. randomly selecting the links between the inputs of the software component and the inputs of the logic gates of the software component, and between the outputs of some logic gates and the inputs of other logic gates (definition of the table GTW). The generation of a software component further comprises defining the truth tables GTT of the logic gates of the software component, and encrypting each value of these truth tables using an encryption key. According to an example, each four values G (=GTT[IN1{0} // IN2{0}]) of the truth table of a logic gate of the software component GCG, GCS can be computed as follows:

$$G = PF2(IN1, IN2, OV) \tag{4}$$

for each possible combination of the valid values of the inputs IN1, IN2 and the output OV, when considering the binary states corresponding to the valid values of IN1, IN2 and OV, and the logic operation performed by the logic gate, PF2 representing a non-reversible function. According to the example defined by equation (2), each four values G of the truth table of a logic gate can be computed as follows:

$$G = AES(GCK, K) \oplus K \oplus OV \tag{5}$$

with $K = CF(IN1, IN2) \oplus T$.

As a consequence, it is very difficult to determine the binary states of the input and output values and the function of the logic gates of the software component. As a result, the functioning of the software component GCG, GCS cannot be easily determined. In addition, the software component can process only the two valid values of each input of the circuit, among a huge number of invalid values. Therefore, it is not possible to apply any values to the inputs of the software component. For more details on garbled circuits, reference may be made to the document "Foundations of Garbled Circuits", Mihir Bellare, Viet Tung Hoang, Phillip Rogaway, dated October 1, 2012.

A hacker or a malware program executed by the terminal UT may be able to get the password PC input by the user in step S11. However, the knowledge of this password is not sufficient for the hacker to be authenticated in steps S1 to S18 since the typed positions POSi must correspond to the keypad KYP and validation code CC displayed by the execution of the software component GCS transmitted to the terminal UT in step S7. The hacker or malware has a very short time to get the keypad key layout by analyzing the displayed image frames FRM or by executing or analyzing the software component.

When the server ASRV generates the software components GCG, GCS, it can be decided to use another bit rank in the values of the wires of the software component for defining the corresponding binary state of these values. The bits at the selected bit rank in the input values a logic gate are used to select a data in the truth table GTT of the logic gate, and the bits at the selected bit rank in the output values of the software component GCG, GCS are extracted using the decoding mask DMSK, IMSK.

According to an embodiment, the secure element SE is a smartcard comprising a display, e.g. an electronic ink display to display the message MSG including the name of the user and the validation code CC which is randomly generated by the secure element SE. The software component GCS may be generated so that it does not display the validation code CC. In this way, only the user having the secure element involved in the current transaction can see the validation code to be typed using the software component that is currently running on the terminal UT. The procedure of Figures 3 and 4 is directly applicable to this embodiment. In addition, the user may check that the user name displayed by the terminal UT and the secure element SE are consistent.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

The methods disclosed herein may be totally of partially implemented by software programs executable by the main processor HP (CPU) of the user terminal UT, and/or at least partially by the graphic processor GP of the user terminal UT.

Further, the methods disclosed herein are not limited to displaying sensitive information such as a keypad with a randomly selected layout and a validation code (CC), displayed using flickering segments. Only the password PC of the user may be requested. Indeed, the object of such a display is to check that the user knows a secret data shared with the server ASRV and perceives information presented by the terminal in a way perceptible only by a human. Alternative challenge-response schemes can be implemented in other embodiments. According to an embodiment, the displayed message MSG may request the user to input a combination such as the sum or the multiplication of the digits of the displayed validation code CC.

Instead of displaying a keypad with a variable key layout, the software component GCS and corresponding mask IMSK may be configured to display a biometric challenge, requesting the user to input a response using a sensor that may be used for instance as a biometric sensor. The sensor may be a camera, a fingerprint sensor or a microphone (or an iris sensor, a heart rate monitor, a glucose monitor, a blood pressure sensor, ...). In this case, the user may be invited during a secured enrolment procedure to introduce in a terminal such as the terminal UT, requested biometric data using one or more sensors of the terminal (and/or one or more sensors securely associated with the terminal), for example according to displayed instructions. According to examples, the user can be instructed to enter fingerprints of several or all of his fingers using a fingerprint sensor, and/or to pick up pictures of his face (e.g. left, front, right pictures), using a camera (a conventional imaging camera, or any other type of camera such as thermal or infrared camera), and/or voice recordings by saying a list of words, letters, or figures displayed by the terminal, using a microphone.

In addition to this or in another embodiment, the generated frames may FRM comprise differences with a previously generated frame.

According to another embodiment, the flickering or blinking of segments may be controlled directly in/by the graphic processor, by setting pixel intensity, additive or subtractive pixel color, pixel refresh rate, or pixel flickering parameters of the graphic processor.

According to another embodiment, the challenge used to authenticate the user is transmitted to the user using other means than by displaying it on a display screen. For instance, the challenge can be transmitted to the user by audio means using an audio cryptographic algorithm such as described in "Simple Audio Cryptography", by Yusuf Adriansyah, dated April 29, 2010. According to this algorithm, an original audio sequence is decomposed into a number of source audio sequences of the same length as the original audio sequence, in a way such that the original audio sequence can be reconstructed only by simultaneously playing all the source audio sequences generated by the decomposition, and such that it is very difficult to reconstruct the original audio sequence if any one of the source audio sequence is missing. Provision may be made to play two source audio sequences simultaneously, one via the terminal UT and the other via other means such as a portable device having a memory storing a source audio sequence and a headphone playing the stored source audio sequence without a microphone of the terminal hearing it. If the user hears an intelligible audio message by playing the two source audio sequences simultaneously, it means that the source audio sequence played by the portable device complements the source audio sequence.

Further, the methods disclosed herein are not limited to the generation of a secret key in a secure element. The methods disclosed herein may be applied to securely generating sensible or secret information in a secure element, the information being only stored in another secure element which is unavailable (lost or stolen).

Further, the methods disclosed herein are not limited to displaying image frames and introduction of secret data (PC, CC) using a single user terminal. The methods disclosed herein may be applied to securely authenticate a user on another connected device, the frame images being displayed on the user terminal or on a remote display such as a smartwatch, virtual reality glasses or lenses, or projected on a surface or in the form of a 3D image or any IoT (Internet of Things) device having display functions or the like. Similarly, the secret data may be input in another device connected to the user terminal or using voice or gesture. Therefore, the words "user terminal" may designate a single device or a set of devices including a terminal without a display, an IoT device, a smart home terminal, and any input terminal that allows the user to enter data.

The user terminal UT may be controlled by voice or gesture. Voice command may be translated to command. Each recognized command being equivalent to one of the positions POSi. The keypad may be replaced by any other representations such as the ones requiring a gesture, following a geometric figure or tracing links between dots. Further, the input terminal may be a 3D input terminal with which the user may interact by 3D gestures in the air. Therefore the positions POSi may be 3D coordinate positions in space.

In other embodiments, the display may be any display including for example an ATM (Automated Teller Machine), a vending machine, a television set, a public display, a projected display, a virtual display, a 3D (three-dimensional) display, a hologram, or any tool used to display images and/or video. In other embodiments, the terminal may be any input equipment including for example a touch screen, a game accessory, a gesture acquisition system, a voice or sound command system.

In other embodiments, the images frames FRM are generated without applying the mask IMSK, and are displayed separately from the mask IMSK using two display devices, one of the two display devices being transparent, such as a display device in the form of eye lenses, the displayed images becoming intelligible to the user when they are superimposed with the displayed mask IMSK, the displayed white pixels of the mask being transparent and the displayed black pixels of the mask being opaque.

Further, the methods disclosed herein are not limited to the use of garbled circuits for implementing the software components GCG, GCS. Other methods for protecting software against tampering and reverse-engineering, may be used, such as obfuscation, or encryption such as homomorphic encryption. Obfuscation methods are used to make the code of a program impenetrable and thus obscure the operation of the program loaded in a processor, and/or prevent the operation of the program from being unveiled, or the modification of the program by an unauthorized person. Such methods are described, for example, in the document "Obfuscating Circuits via Composite-Order Graded Encoding" Benny Applebaumy, Zvika Brakerskiz, IACR-TCC 12/01/2015, or in the document "How to Obfuscate Programs Directly", Joe Zimmerman , IACR, 30/09/2014.

**Claims**

1. A method for generating a secret data to be stored in a secure element, the method comprising:

   authenticating a user of the secure element on the basis of a password (PC) shared by the user and the secure element;

   generating by the authentication server a first software component (GCG) configured to receive as input data a master key (MKY), the password, and an encryption key (CSK) securely stored by the secure element, and to provide a secret data (SPK) encrypted using the encryption key;

   dividing the first software component into software parts (GCPi) which are executable separately, each software part receiving a data part (GVIi) of the input data, at least one of the software parts providing the encrypted secret data;

   transmitting each software part and a corresponding data part of the input data to a respective execution server (SSVi);

   executing by each execution server one of the software parts using the data part corresponding to the software part, to obtain the encrypted secret data (ESPK);

   transmitting the encrypted secret data to the secure element; and

   decrypting the encrypted secret data by the secure element using the encryption key, and securely storing the decrypted secret data in said secure element.

2. The method of claim 1, wherein the data parts (GVIi) of the input data (MKY,PC,CSK,POS0-3) are provided in an encryption format to the software parts, the encryption format being such that each data part has valid values (GV1, GV2) and a plurality of invalid values, the method further comprising:

   transmitting each valid value of each encrypted data part with a corresponding unencrypted value and a position of the corresponding unencrypted value in the input data, to a corresponding entity (SSVi, SE) securely storing the corresponding input data, the transmission being performed so as to preserve confidentiality of the transmitted data;

   selecting by the corresponding entity the valid values corresponding to the input data; and

   transmitting each selected valid value of the encrypted data parts to one of the execution servers (SSVi).

3. The method of claim 2, wherein each data part (GVIi) is a binary data having two valid values representing binary states 0 and 1, respectively.

4. The method of one of claims 1 to 3, wherein the authentication of the user comprises:

   receiving from the authentication server (ASRV), by a user terminal (UT) connected to the secure element (SE), a second software component (CGS) configured to generate sets of pixels (PXi), each set of pixels having a visible state and an invisible state, and having a respective probability to be in the visible state or the invisible state being less than 100%;

   executing, by the user terminal, the second software component at a rate corresponding to a frame display refresh rate to generate the sets of pixels at the frame display refresh rate;

   inserting the sets of pixels generated by each execution of the second software component into one respective image frame (BCKF);

   activating display of the image frames at the frame display refresh rate, each image frame including information which is machine non-recognizable as being formed of the sets of pixels, the information becoming visibly recognizable to a user at the frame display refresh rate based on a human visual system;

   acquiring data input by the user in relation with the information; and

   transmitting, by the user terminal, the data input by the user, to the secure element, the password (PC) being determinable from the data input by the user and from the information, the information being determined from a seed number (SD) known by the secure element.

5. The method of one of claims 1 to 4, wherein the first and/or second software component (GCG, GCS) is/are encoded as a garbled circuit including circuit inputs, circuit outputs, logic gates and wires, each logic gate having two inputs and one output, each wire having a first end connected to one of the circuit inputs or to the one output of one of the logic gates and a second end connected to one of the two inputs of one of the logic gates or to one of the circuit outputs, the garbled circuit being generated by selecting a valid data for each binary state of each of the wires, and by computing for one logic gate of the garbled circuit, truth table values as a function of each valid data of each of the two inputs of the one logic gate, each valid data of the output of the one logic gate and a logic operation performed by one of the logic gates.

6. The method of claim 5, wherein the output data provided by the garbled circuit (GCG, GCS) are decrypted using a decoding mask (DMSK, IMSK), by combining a respective bit of each output data with a respective bit of the decryption mask.

7. The method of claim 6, wherein the output data of the first software component (GCG) and the decoding mask (DMSK) are transmitted to the secure element (SE), the secure element determining the encrypted secret data (ESPK) using the decryption mask.

8. The method of one of claims 1 to 7, wherein the first software component (GCG) comprises a first module (KGNC) for generating the secret data (SPK) from the master key (MKY) and the password (PC), and a second module (ENCC) for encrypting the secret data using the encryption key (CSK) of the secure element.

9. The method of claim 8, wherein the first software component (GCG) further comprises a third module (KLYC) for determining the password (PC) from data (POS0-3) input by the user, in relation with information displayed to request the password to the user, and from a seed number (SD) defining the information.

10. The method of one of claims 1 to 8, wherein the software parts (GCPi) are configured to exchange data with each other using secure transmission channels, or by transmitting all valid values of a data to be transmitted, the data to be transmitted being in an encrypted format with valid values and a plurality of invalid values, the value of the data to be transmitted being in a position with respect to the other transmitted valid values, known by the server (SSVi) to which the data is transmitted.

11. The method of one of claims 1 to 9, wherein the first software component (GCG) is stored by the authentication server (ASRV) after being generated, and modified for generating the secret data (SPK) again.

12. The method of one of claims 1 to 10, wherein the division of the first software component (GCG) into the software parts (GCPi) is changed at each execution of the software component (GCG).

13. A server configured to:

    perform a mutual authentication with a secure element (SE) associated with a user terminal (UT) in communication with the server (ASRV);
    generate a first software component (GCG) configured to receive as input data a master key (MKY), the password, and an encryption key (CSK) securely stored by the secure element, and to provide a secret data (SPK) encrypted using the encryption key;
    divide the first software component into software parts (GCPi) which are executable separately, each software part receiving a data part (GVIi) of the input data, at least one of the software parts providing the encrypted secret data; and
    transmit each software part and a corresponding data part of the input data to a respective execution server (SSVi), the execution by each execution server one of the software parts using the data part corresponding to the software part, providing a secret data (ESPK) which is encrypted using the encryption key and which is transmitted to the secure element.

14. The server of claim 13, configured to implement the method of one of claims 2 to 12.

Fig. 1

Fig. 2

Fig. 3

Fig. 4

Fig. 5

Fig. 6

| GCID | | | | | | |
|---|---|---|---|---|---|---|
| DIM | m | s | g | k | w | l |
| GVI[1..s] | GV1 | GV2 | | | | |
| NBGL[1..l] | | | | | | |
| GTW[1..g] | IN1 | IN2 | ON | GTYP | | |
| GTT[1..k] | OV00 | OV01 | OV10 | OV11 | | |
| GCK | | | | | | |
| DMSK | | | | | | |

Fig. 7

# Key Generation
## M . XXXXXX

MSG

BNF

FRM

FBD

KY

KYL

SG

KYPF

**Fig. 8A**

**Fig. 8B**

CC

BN

# Key Generation
## M . XXXXXX

MSG

IMG

FBD

KY

KYL

KYP

CC   SG

Key Generation
Mr. XXXXXX

MSG

BNF

Key Generation
M . XXXXXX

SG        MSG

SG              BN

Key Generation
Mr. XXXXXX

DL        CC          MSG

Fig. 9

Fig. 10

Fig. 11

GCSD

| GCID |  |  |  |  |  |  |  |
|------|---|---|---|---|---|---|---|
| DIM | n | m | s | g | k | w | l |
| INLB[1..n] |  |  |  |  |  |  |  |
| SGLB[1..s] |  |  |  |  |  |  |  |
| RNLB[1..s] | RNV1 | RNV2 |  |  |  |  |  |
| NBGL[1..l] |  |  |  |  |  |  |  |
| GTW[1..g] | IN1 | IN2 | ON | GTYP |  |  |  |
| GTT[1..k] | OV00 | OV01 | OV10 | OV11 |  |  |  |
| GCK |  |  |  |  |  |  |  |
| IMSK |  |  |  |  |  |  |  |

## Fig. 12

## Fig. 13

Europäisches
Patentamt

European
Patent Office

Office européen
des brevets

# EUROPEAN SEARCH REPORT

Application Number

EP 18 18 2425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/085974 A1 (LELEU JEAN-LUC [FR]) 24 March 2016 (2016-03-24) * abstract * * paragraphs [0002] - [0090] * * figures 1-10 * | 1-14 | INV. G06F21/36 H04L9/32 |
| A | KIMMO JÄRVINEN ET AL: "Garbled Circuits for Leakage-Resilience: Hardware Implementation and Evaluation of One-Time Programs", INTERNATIONAL ASSOCIATION FOR CRYPTOLOGIC RESEARCH,, vol. 20100617:125539, 17 June 2010 (2010-06-17), pages 1-17, XP061004126, [retrieved on 2010-06-17] * the whole document * | 1-14 | |

TECHNICAL FIELDS
SEARCHED     (IPC)

G06F
H04L
H04W

The present search report has been drawn up for all claims

| Place of search | Date of completion of the search | Examiner |
|---|---|---|
| Munich | 20 December 2018 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 18 18 2425

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2018

| Patent document cited in search report | Publication date | Patent family member(s) | Publication date |
|---|---|---|---|
| US 2016085974 A1 | 24-03-2016 | EP 2673732 A1 | 18-12-2013 |
| | | EP 3264305 A1 | 03-01-2018 |
| | | FR 2971599 A1 | 17-08-2012 |
| | | US 2014040633 A1 | 06-02-2014 |
| | | US 2016085974 A1 | 24-03-2016 |
| | | US 2017372083 A1 | 28-12-2017 |
| | | WO 2012107698 A1 | 16-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3319001 A

### Non-patent literature cited in the description

- **MIHIR BELLARE ; VIET TUNG HOANG ; PHILLIP ROGAWAY.** *Foundations of Garbled Circuits,* 01 October 2012
- **YUSUF ADRIANSYAH.** *Simple Audio Cryptography,* 29 April 2010
- **BENNY APPLEBAUMY ; ZVIKA BRAKERSKIZ.** Obfuscating Circuits via Composite-Order Graded Encoding. *IACR-TCC,* 01 December 2015
- **JOE ZIMMERMAN.** How to Obfuscate Programs Directly. *IACR,* 30 September 2014